# EUROPEAN PATENT APPLICATION

(11) **EP 4 185 067 A1**
(43) Date of publication of application: **24.05.2023**
(21) Application number: 21841843.2
(22) Date of filing: 09.06.2021
(51) Int. Cl.: H04W 76/18, H04W 76/16, H04W 76/19, H04W 88/06, H04W 24/10, H04W 60/00

(54) **ELECTRONIC DEVICE SUPPORTING MULTIPLE COMMUNICATION SCHEMES AND OPERATION METHOD THEREOF**

(30) Priority: 15.07.2020 KR 20200087836
(71) Applicant: Samsung Electronics Co., Ltd., Suwon-si, Gyeonggi-do 16677 (KR)
(72) Inventor: YOON, Sukkyung, Suwon-si, Gyeonggi-do 16677 (KR); JUNG, Dongsuk, Suwon-si, Gyeonggi-do 16677 (KR); LEE, Dongjin, Suwon-si, Gyeonggi-do 16677 (KR); KIM, Huiyeon, Suwon-si, Gyeonggi-do 16677 (KR); SHIN, Donghyeok, Suwon-si, Gyeonggi-do 16677 (KR); GHO, Gwanghyun, Suwon-si, Gyeonggi-do 16677 (KR)
(74) Representative: Gulde & Partner
(86) International application number: PCT/KR2021/007195
(87) International publication number: WO 2022/014868

(57) **Abstract**

According to various embodiments, an electronic device may comprise at least one processor, wherein the at least one processor is configured to: attempt to perform a registration in a 5^{th} generation core (5GC) while N1 mode capability is activated; on the basis of failure of the registration in the 5GC, deactivate the N1 mode capability and initiate a timer for reactivating the N1 mode capability; and before the timer expires, on the basis of identification that a pre-configured condition associated with 5G communication is satisfied, through dual connectivity between evolved packet core (EPC)-based LTE communication and the 5G communication, activate the N1 mode capability. Various other embodiments are possible.

## Description

### [Technical Field]

The disclosure relates to an electronic device for supporting a plurality of communication schemes and a method of operating the same.

### [Background Art]

To meet the demand for wireless data traffic having increased since deployment of 4G communication systems, efforts have been made to develop an improved 5G or pre-5G communication system. Therefore, the 5G or pre-5G communication system is also called a "beyond 4G network" communication system or a "post LTE" system. The 5G communication system is considered to be implemented in mmWave bands (e.g., 6 to 60GHz bands) so as to accomplish higher data rates. To decrease propagation loss of the radio waves and increase the transmission distance in the ultrahigh frequency bands, beamforming, massive multiple-input multiple-output (massive MIMO), full dimensional MIMO (FD-MIMO), array antenna, analog beam forming, large scale antenna techniques are discussed in 5G communication systems.

Among new structural characteristics of the 5G network, the most prominent characteristic is introduction of a network slicing technology for radio access network (RAN) and core network (CN) structures. The technology groups network resources and network functions into one independent network slice according to an individual service and provides the one independent network slice, so as to apply attributes such as isolation, customization, and independent management and orchestration of network system functions and resources to a mobile communication network structure. Through the use of the network slicing technology, it is possible to select and combine network functions of the 5G system according to a reference such as a service, a user, or a business model and provide an independent and flexible 5G service.

In connection with 5G communication, an NSA (non-stand alone) scheme and an SA (stand alone) scheme have been proposed. In the NSA scheme, while an operation of a control plane is performed using an LTE communication network (for example, an EPC (evolved packet core)) of 4G, data traffic corresponding to a user plane may be transmitted and received through both the LTE communication network and the 5G communication network. In the SA scheme, the operation of the control plane is performed using the 5G communication network (for example, a 5^{th} generation core (5GC)), and data traffic corresponding to the user plane may also be transmitted and received through the 5G communication network.

### [Detailed Description of the Invention]

### [Technical Problem]

When registration in a 5GC fails, a user equipment (UE) may deactivate (disable) an N1 mode capability. When the N1 mode capability is deactivated, the UE may initiate a timer. When the timer expires, the UE may activate again the N1 mode capability. Even though the registration in the 5GC fails due to temporary deterioration of a channel environment, the use of the 5GC by the UE according to an SA scheme may be restricted before the timer expires.

When the registration in the EPC fails, the UE may deactivate the S1 mode capability. When the S1 mode capability is deactivated, the UE may initiate the timer. When the timer expires, the LTE may activate again the S1 mode capability. However, LTE communication should be used, for example, VoLTE (voice over LTE) is used according to EPS (evolved packet system (EPS) fallback while 5G communication is performed. However, when the S1 mode capability is deactivated, a function of using LTE communication such as EPS fallback may be restricted.

An electronic device and a method of operating the same according to various embodiments may activate the N1 mode capability on the basis of satisfaction of a condition associated with 5G communication through NSA even before the time expires. An electronic device and a method of operating the same according to various embodiments may perform registration for 5G communication according to transmission of a message including reactivation information of the S1 mode when the S1 mode capability is deactivated for the reason that is not registration rejection through the network even before the timer expires.

### [Technical Solution]

According to various embodiments, an electronic device includes at least one processor, wherein the at least one processor is configured to attempt registration in a 5GC (5^{th} generation core) in a state in which an N1 mode capability is activated, deactivate the N1 mode capability, based on failure of the registration in the 5GC, initiate a timer for activating again the N1 mode capability, and the N1 mode capability, based on identification that a preset condition associated with 5G communication is satisfied, through dual connectivity of LTE communication and the 5G communication based on an EPC (evolved packet core) before the timer expires.

According to various embodiments, an electronic device includes at least one processor, wherein the at least one processor is configured to attempt registration in an EPC (evolved packet core) in a state in which an S1 mode capability is activated, deactivate the S1 mode capability, based on failure of the registration in the EPC, and initiate a timer for activating again the S1 mode capability, and attempt registration in a 5GC (5^{th} generation core) by transmission of a message including activation information of the S1 mode capability, based on failure of the registration in the EPC that is not rejection from the EPC when a process of network registration in the 5GC is generated before the timer expires.

According to various embodiments, a method of operating an electronic device includes attempting registration in a 5GC (5^{th} generation core) in a state in which an N1 mode capability is activated, deactivating the N1 mode capability, based on failure of the registration in the 5GC and initiating a timer for activating again the N1 mode capability, and activating the N1 mode capability, based on identification that a preset condition associated with 5G communication is satisfied, through dual connectivity of LTE communication and the 5G communication based on an EPC (evolved packet core) before the timer expires.

According to various embodiments, a method of operating an electronic device includes attempting registration in an EPC (evolved packet core) in a state in which an S1 mode capability is activated, deactivating the S1 mode capability, based on failure of the registration in the EPC, and initiating a timer for activating again the S1 mode capability, and attempting registration in a SGC (5^{th} generation core) by transmission of a message including activation information of the S1 mode capability, based on failure of the registration in the EPC that is not rejection from the EPC, before the timer expires.

### [Advantageous Effects]

According to various embodiments, it is possible to provide an electronic device and a method of operating the same capable of activating an N1 mode capability on the basis of satisfaction of a condition associated with 5G communication through NSA before a time expires. Accordingly, in an environment in which 5G communication can be performed, a situation in which the 5G communication is not performed since a timer has not expired may occur. An electronic device and a method of operating the same according to various embodiments may perform registration for 5G communication according to transmission of a message including activation information of the S1 mode when the S1 mode capability is deactivated for the reason that is not registration rejection through the network even before the timer expires. Accordingly, when execution of a function requiring LTE fallback is needed while 5G SA communication is performed, LTE communication is deactivated and thus a situation in which the corresponding function is restricted may not occur.

### [Brief Description of Drawings]

FIG. 1 is a block diagram illustrating an electronic device within a network environment according to various embodiments.
FIGs. 2A, 2B, and 2C are block diagrams illustrating an electronic device for supporting network communication and 5G network communication according to various embodiments.
FIGs. 3A, 3B, and 3C illustrate wireless communication systems for providing networks of legacy communication and/or 5G communication according to various embodiments.
FIG. 4 is a flowchart illustrating a method of operating an electronic device according to various embodiments.
FIGs. 5A, 5B, 5C, and 5D illustrate operations of the electronic device and the network according to various embodiments.
FIG. 6 is a flowchart illustrating a method of operating an electronic device according to various embodiments.
FIG. 7 is a flowchart illustrating a method of operating an electronic device according to various embodiments.
FIG. 8 is a flowchart illustrating a method of operating an electronic device according to various embodiments.
FIG. 9 is a flowchart illustrating a method of operating an electronic device according to various embodiments.
FIG. 10 is a flowchart illustrating a method of operating an electronic device and a network according to various embodiments.
FIG. 11 is a flowchart illustrating a method of operating an electronic device according to various embodiments.
FIGs. 12A and 12B illustrate operations of the electronic device and the network according to various embodiments.
FIG. 13A is a flowchart illustrating a method of operating an electronic device according to various embodiments.
FIG. 13B is a flowchart illustrating a method of operating the electronic device according to various embodiments.

### [Mode for Carrying out the Invention]

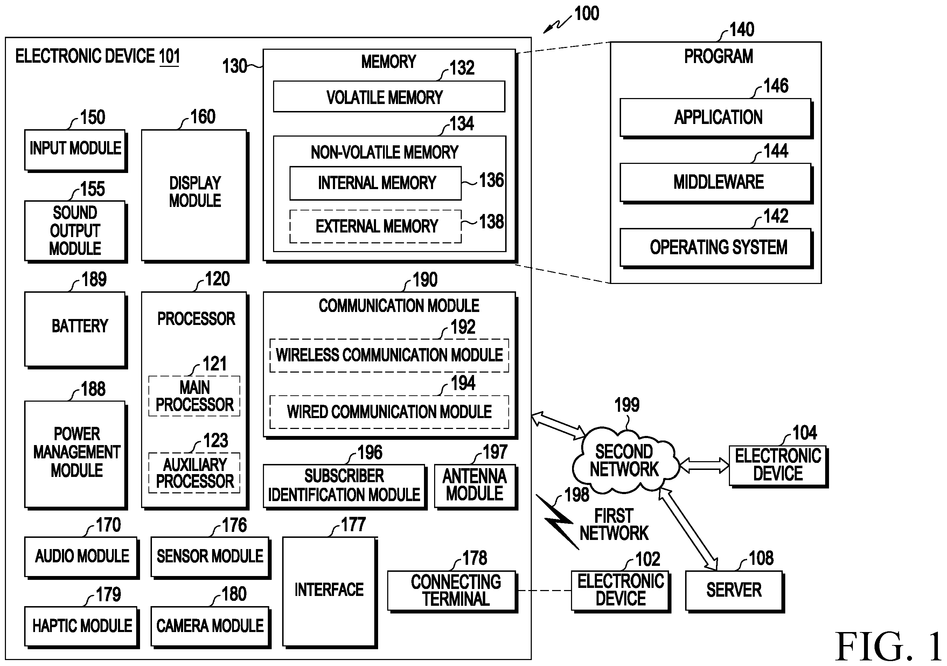

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active (e.g., executing an application) state. According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., an electronic device 102 (e.g., a speaker or a headphone)) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

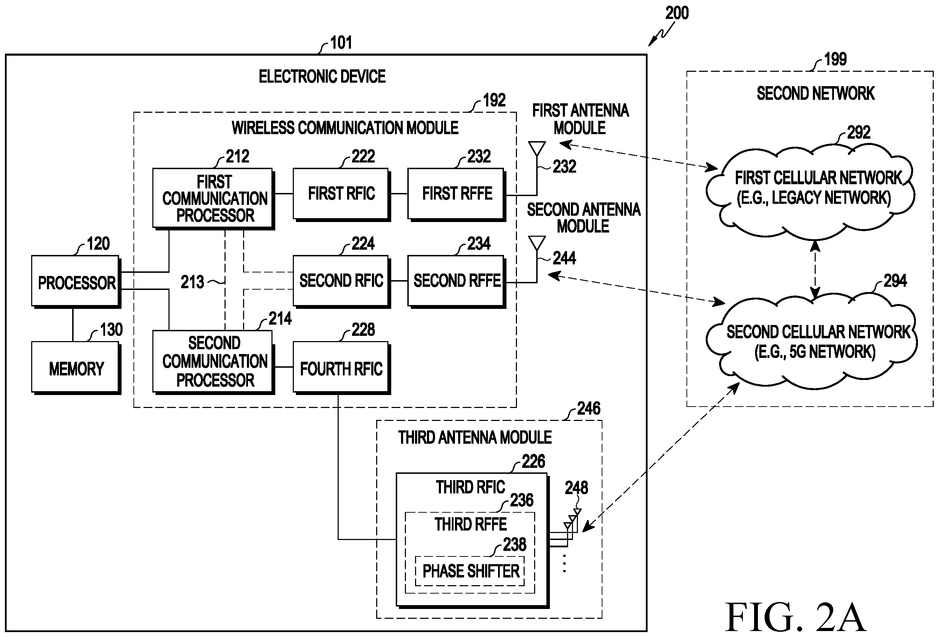

FIG. 2A is a block diagram 200 illustrating the electronic device 101 for supporting network communication and 5G network communication according to various embodiments. Referring to FIG. 2A, the electronic device 101 may include a first communication processor 212, a second communication processor 214, a first radio frequency integrated circuit (RFIC) 222, a second RFIC 224, a third RFIC 226, a fourth RFIC 228, a first radio frequency front end (RFFE) 232, a second RFFE 234, a first antenna module 242, a second antenna module 244, a third antenna module 246, and antennas 248. The electronic device 101 may further include the processor 120 and the memory 130. The second network 199 may include a first network 292 and a second network 294. According to another embodiment, the electronic device 101 may further include at least one of the elements illustrated in FIG. 1, and the second network 199 may further include at least one other network. According to an embodiment, the first communication processor 212, the second communication processor 214, the first RFIC 222, the second RFIC 224, the fourth RFIC 228, the first RFFE 232, and the second RFFE 234 may configure at least a portion of the wireless communication module 192. According to another embodiment, the fourth RFIC 228 may be omitted or may be included as a part of the third RFIC 226.

The first communication processor 212 may establish a communication channel in a band to be used for wireless communication with the first network 292 and support legacy network communication through the established communication channel. According to various embodiments, the first network may be a legacy network including a 2G, a 3G, a 4G, or a long-term evolution (LTE) network. The second communication processor 214 may establish a communication channel corresponding to a predetermined band (for example, about 6 GHz to about 60 GHz) among bands to be used for wireless communication with the second network 294 and support 5G network communication through the established communication channel. According to various embodiments, the second network 294 may be a 5G network defined in the 3GPP. In addition, according to an embodiment, the first communication processor 212 or the second communication processor 214 may establish a communication channel corresponding to another predetermined band (for example, equal to or lower than about 6 GHz) among bands to be used for wireless communication with the second network 294 and support 5G network communication through the established communication channel.

The first communication processor 212 may transmit and receive data to and from the second communication processor 214. For example, data classified to be transmitted through the second cellular network 294 may be changed to be transmitted through the first cellular network 292. In this case, the first communication processor 212 may receive transmission data from the second communication processor 214.

For example, the first communication processor 212 may transmit and receive data to and from the second communication processor 214 through an inter-processor interface 213. The inter-processor interface 213 may be implemented as, for example, a UART (universal asynchronous receiver/transmitter) (for example, an HS-UART (high speed-UART) or a PCIe (peripheral component interconnect bus express) interface), but there is no limitation therein. Alternatively, the first communication processor 212 and the second communication processor 214 may exchange control information and packet data information through, for example, a shared memory. The first communication processor 212 may transmit and receive various pieces of information such as sensing information, information on an output intensity, and Resource Block (RB) allocation information to and from the second communication processor 214.

According to implementation, the first communication processor 212 may not be directly connected to the second communication processor 214. In this case, the first communication processor 212 may transmit and receive data to and from the second communication processor 214 through the processor 120 (for example, an application processor). For example, the first communication processor 212 and the second communication processor 214 may transmit and receive data to and from the processor 120 (for example, an application processor) through an HS-UART interface or a PCIe interface, but there is no limitation in the type thereof. Alternatively, the first communication processor 212 and the second communication processor 214 may exchange control information and packet data information with the processor 120 (for example, an application processor) through a shared memory.

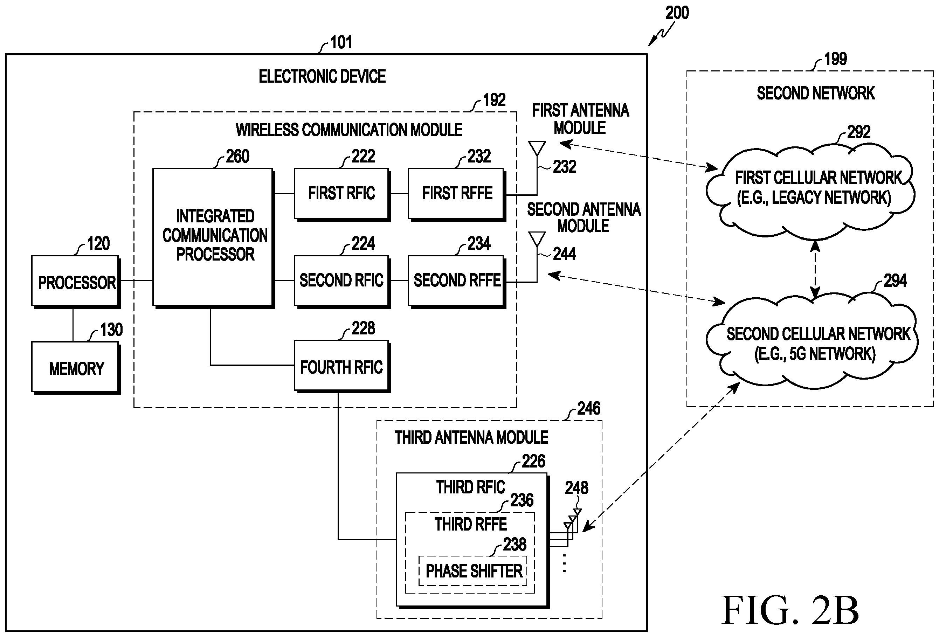

According to an embodiment, the first communication processor 212 and the second communication processor 214 may be implemented within a single chip or a single package. According to various embodiments, the first communication processor 212 or the second communication processor 214 may be configured with the processor 120, the auxiliary processor 123, or the communication module 190 within a single chip or a single package. For example, as illustrated in FIG. 2B, an integrated communication processor 260 may support all functions for communication with the first cellular network 292 and the second cellular network 294.

In transmission, the first RFIC 222 may convert a baseband signal generated by the first communication processor 212 into a radio frequency (RF) signal from about 700 MHz to about 3 GHz used for the first network 292 (for example, legacy network). In reception, the RF signal may be acquired from the first network 292 (for example, legacy network) through an antenna (for example, the first antenna module 242) and may be preprocessed through the RFFE (for example, first RFFE 232). The first RFIC 222 may convert the preprocessed RF signal into a baseband signal to be processed by the first communication processor 212.

In transmission, the second RFIC 224 may convert a baseband signal generated by the first communication processor 212 or the second communication processor 214 into an RF signal (hereinafter, referred to as a 5G Sub6 RF signal) in a Sub6 band (for example, equal to or lower than about 6 GHz) used by the second network 294 (for example, the 5G network). In reception, a 5G Sub6 RF signal may be acquired from the second network 294 (for example, 5G network) through an antenna (for example, the second antenna module 244) and may be preprocessed through the RFFE (for example, second RFFE 234). The second RFIC 224 may convert the preprocessed 5G Sub6 RF signal into a baseband signal to be processed by the corresponding communication processor among the first communication processor 212 or the second communication processor 214.

The third RFIC 226 may convert a baseband signal generated by the second communication processor 214 into an RF signal (hereinafter, referred to as a 5G Above6 RF signal) in a 5G Above6 band (for example, from about 6 GHz to about 60 GHz) used by the second network 294 (for example, 5G network). In reception, a 5G Above6 RF signal may be acquired from the second network 294 (for example, 5G network) through an antenna (for example, the antenna 248) and may be preprocessed through the third RFFE 236. The third RFIC 226 may convert the preprocessed 5G Above6 RF signal into a baseband signal to be processed by the second communication processor 214. According to an embodiment, the third RFFE 236 may be configured as a part of the third RFIC 226.

The electronic device 101 may include the fourth RFIC 228 separately from the third RFIC 226 or as a part thereof according to an embodiment. In this case, after converting a baseband signal generated by the second communication processor 214 into an RF signal (hereinafter, referred to as an IF signal) in an intermediate frequency band (for example, about 9 GHz to about 11 GHz), the fourth RFIC 228 may transmit the IF signal to the third RFIC 226. The third RFIC 226 may convert the IF signal into a 5G Above6 RF signal. In reception, the 5G Above6 RF signal may be received from the second cellular network 294 (for example, 5G network) through the antenna (for example, antenna 248) and converted into an IF signal by the third RFIC 226. The fourth RFIC 228 may convert the IF signal into a baseband signal to be processed by the second communication processor 214.

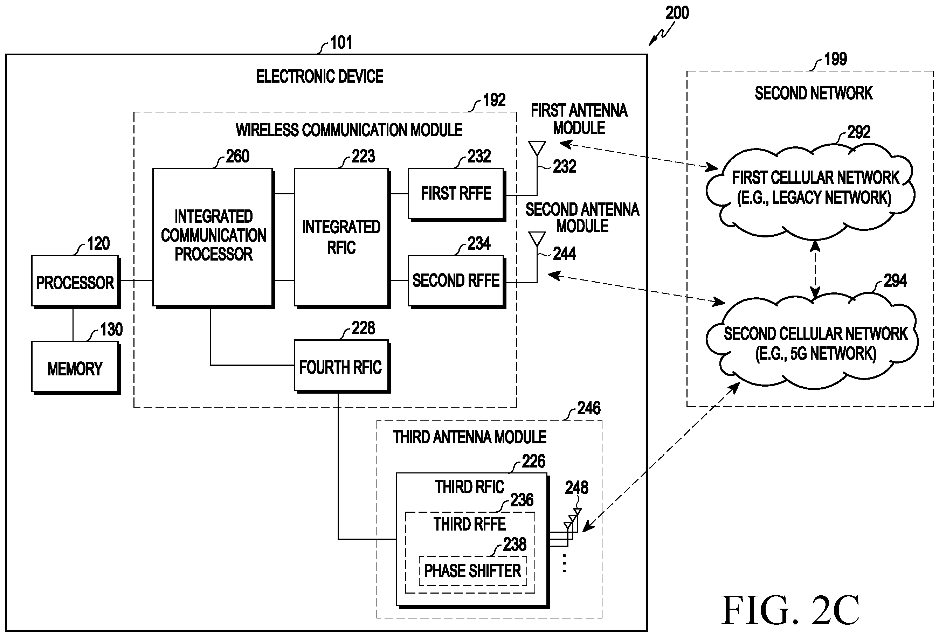

According to an embodiment, the first RFIC 222 and the second RFIC 224 may be implemented as at least a portion of a single chip or a single package. According to various embodiments, when the first RFIC 222 and the second RFIC 224 are implemented as a single chip or a single package in FIG. 2A or FIG. 2B, they may be implemented as an integrated RFIC 223 as illustrated in FIG. 2C. In this case, the integrated RFIC 223 may be connected to the first RFFE 232 and the second RFFE 234 to convert a baseband signal to a signal in a band supported by the first RFFE 232 and/or the second RFFE 234 and transmit the converted signal into one of the first RFFE 232 and the second RFFE 234. According to an embodiment, the first RFFE 232 and the second RFFE 234 may be implemented as at least a portion of a single chip or a single package. According to an embodiment, at least one antenna module of the first antenna module 242 or the second antenna module 244 may be omitted or may be combined with another antenna module to process RF signals in a plurality of corresponding bands.

According to an embodiment, the third RFIC 226 and the antenna 248 may be disposed on the same substrate to configure the third antenna module 246. For example, the wireless communication module 192 or the processor 120 may be disposed on a first substrate (for example, main PCB). In this case, the third RFIC 226 may be disposed in a partial area (for example, bottom side) of a second substrate (for example, sub PCB) separated from the first substrate and the antennas 248 may be disposed in another partial area (for example, top side) to configure the third antenna module 246. By disposing the third RFIC 226 and the antennas 248 on the same substrate, it is possible to reduce the length of a transmission line therebetween. This is to reduce loss (for example, attenuation) of the signal in a high frequency band (for example, about 6 GHz to about 60 GHz) used for, for example, 5G network communication due to the transmission line. Accordingly, the electronic device 101 may improve the quality or speed of communication with the second network 294 (for example, the 5G network).

According to an embodiment, the antenna 248 may be configured as an antenna array including a plurality of antenna elements which can be used for beamforming. In this case, the third RFIC 226 may include, for example, a plurality of phase shifters 238 corresponding to the plurality of antenna elements as a portion of the third RFFE 236. In transmission, each of the plurality of phase shifters 238 may convert a phase of a 5G Above6 RF signal to be transmitted to the outside of the electronic device 101 (for example, a base station of the 5G network) through a corresponding antenna element. In reception, each of the plurality of phase shifters 238 may convert a phase of a 5G Above6 RF signal received from the outside through a corresponding antenna element into the same or substantially the same phases. This enables transmission or reception through beamforming between the electronic device 101 and the outside.

The second network 294 (for example, the 5G network) may operate independently from the first network 292 (for example, the legacy network) (for example, stand-alone (SA)) or may operate through a connection thereto (for example, non-stand alone(NSA)). For example, in the 5G network, only an access network (for example, a 5G radio access network (RAN) or a next generation RAN (NG RAN)) may exist without a core network (for example, a next generation core (NGC)). In this case, the electronic device 101 may access the access network of the 5G network and then access an external network (for example, Internet) under the control of the core network (for example, evolved packed core (EPC) of the legacy network. Protocol information (for example, LTE protocol information) for communication with the legacy network and protocol information (for example, new radio (NR) protocol information) for communication with the 5G network may be stored in the memory 130 and may be accessed by another element (for example, the processor 120, the first communication processor 212, or the second communication processor 214).

FIGs. 2A and 2B illustrate that the processor 120 is separated from the first communication processor 212, the second communication processor 214, or the integrated communication processor 260, but this is only an example. In various embodiments, the electronic device 101 may include an integrated SoC (system on chip) supporting all of the function of the processor 120, the function for first network communication of the first communication processor 212, and the function for second network communication of the second communication processor 214. Those skilled in the art can understand that the operation of the processor 120, the first communication processor 212, or the second communication processor 214 in this document can also be performed by the integrated SoC.

Alternatively, although not illustrated, the embodiments of the disclosure can be applied to the electronic device 101 supporting only the LTE communication. In this case, the electronic device 101 may be implemented to include the processor 120 and/or the first communication processor 212, the first RFIC 222, the first RFFE 232, and the first antenna module 242 and not include elements associated with 5G communication (for example, at least one of the second RFIC 224, the second RFFE 234, the second antenna module 244, the second communication processor 214, the fourth RFIC 238, and the third antenna module 246).

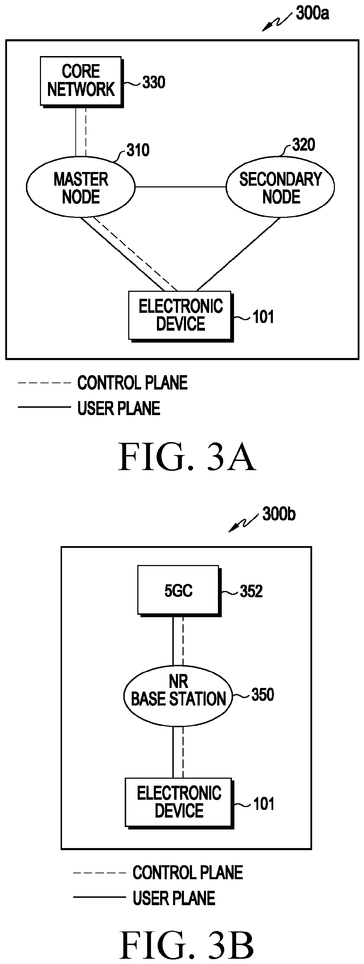

FIGs. 3A to 3C illustrate wireless communication systems providing networks of legacy communication and/or 5G communication according to various embodiments. Referring to FIGs. 3A to 3C, network environments 300a to 300c may include at least one of the legacy network and the 5G network. The legacy network may include, for example, a 4G or LTE eNB 340 (for example, an eNodeB (eNB)) of the 3GPP standard supporting radio access with the electronic device 101 and an evolved packet core (EPC) 342 for managing 4G communication. The 5G network may include, for example, a New Radio (NR) base station 350 (for example, a gNodeB (gNB)) supporting radio access with the electronic device 101 and a 5^{th} Generation Core (5GC) 452 for managing 5G communication of the electronic device 101.

According to various embodiments, the electronic device 101 may transmit and receive a control message and user data through legacy communication and/or 5G communication. The control message may include, for example, a message related to at least one of security control of the electronic device 101, bearer setup, authentication, registration, or mobility management. The user data may be, for example, user data other than a control message transmitted and received between the electronic device 101 and a core network 330 (for example, the EPC 342).

Referring to FIG. 3A, the electronic device 101 according to an embodiment may transmit and receive at least one of a control message or user data to and from at least some of the 5G network (for example, the NR gNB 350 and the 5GC 352) using at least some of the legacy network (for example, the LTE eNB 340 and the EPC 342).

According to various embodiments, the network environment 300a may include a network environment for providing wireless communication dual connectivity (DC) to the LTE eNB 340 and the NR gNB 350 and transmitting and receiving a control message to and from the electronic device 101 through one core network of the EPC 342 or the 5GC 352.

According to various embodiments, in the DC environment, one of the LTE eNB 340 or the NR gNB 350 may operate as a Master Node (MN) 310, and the other may operate as a Secondary Node (SN) 320. The MN 310 may be connected to the core network 230 and transmit and receive a control message. The MN 310 and the SN 320 may be connected to each other through a network interface and transmit and receive a message related to radio resource (for example, communication channel) management. In various embodiments, the MN 310 and the SN 320 may be one base station or may be implemented as a plurality of base stations.

According to various embodiments, the MN 310 may include the LTE eNB 340, the SN 320 may include the NR gNB 350, and the core network 330 may include the EPC 342. For example, the control message may be transmitted and received through the LTE gNB 340 and the EPC 342, and the user data may be transmitted and received through at least one of the LTE eNB 340 or the NR gNB 350. In various embodiments, the LTE eNB 340 and the NR gNB 350 may be one base station or may be implemented as a plurality of base stations.

According to various embodiments, the MN 310 may include the NR gNB 350, the SN 320 may include the LTE eNB 340, and the core network 330 may include the 5GC 352. For example, the control message may be transmitted and received through the NR gNB 350 and the 5GC 352, and the user data may be transmitted and received through at least one of the LTE eNB 340 or the NR gNB 350.

Referring to FIG. 3B, according to various embodiments, the 5G network may include the NR gNB 350 and the 5GC 352 and may independently transmit and receive the control message and the user data to and from the electronic device 101. Alternatively, although not illustrated, the electronic device 101 may be connected to a core network (for example, the EPC 342) through the LTE eNB 340 (for example, eNB) and may be applied to the electronic device 101 supporting only LTE communication in the embodiment of the disclosure.

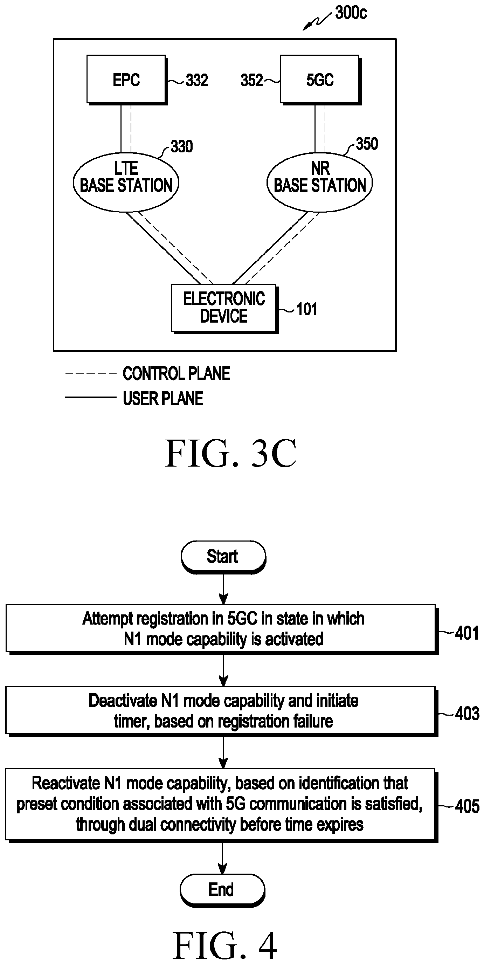

Referring to FIG. 3C, the legacy network and the 5G network according to various embodiments may independently transmit and receive data. For example, the electronic device 101 and the EPC 342 may transmit and receive a control message and user data through the LTE eNB 340. According to another embodiment, the electronic device 101 and the 5GC 352 may transmit and receive a control message and user data through the NR gNB 350.

According to various embodiments, the electronic device 101 may be registered in at least one of the EPC 342 or the 5GC 352 and transmit and receive a control message.

According to various embodiments, the EPC 342 or the 5GC 352 may interwork and manage communication of the electronic device 101. For example, movement information of the electronic device 101 may be transmitted and received through an interface between the EPC 342 and the 5GC 352.

As described above, the dual connection through the LTE eNB 340 and the NR gNB 350 may be also named E-UTRA New radio Dual Connectivity (EN-DC).

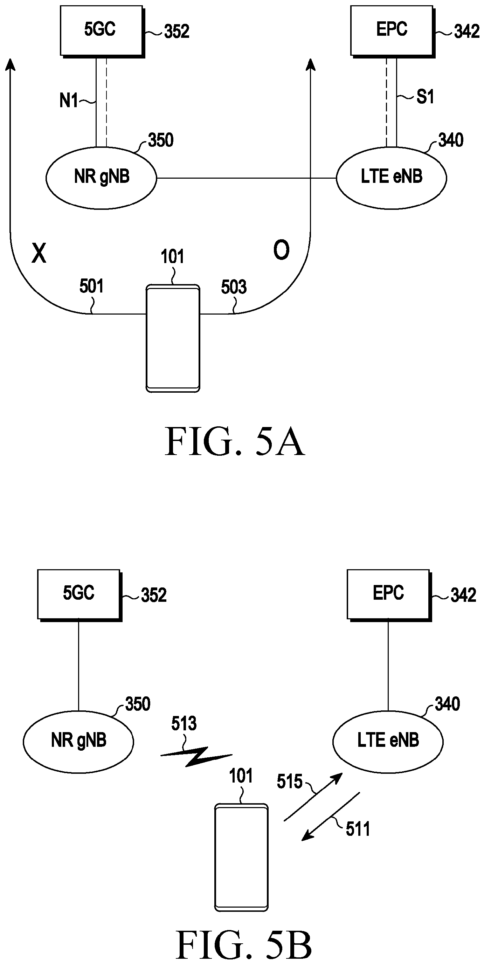

FIG. 4 is a flowchart illustrating a method of operating an electronic device according to various embodiments. The embodiment of FIG. 4 is described with reference to FIGs. 5A to 5D. FIGs. 5A to 5D illustrate the operation of the electronic device and the network according to various embodiments.

According to various embodiments, the electronic device 101 (for example, at least one of the processor 120, the first communication processor 212, the second communication processor 214, the integrated communication processor 260, or the integrated SoC) may attempt registration of the 5GC according to the SA mode in the state in which N1 mode capability is activated in operation 401. In operation 403, the electronic device 101 may deactivate the N1 mode capability on the basis of failure of the registration of the 5GC and initiate a timer. For example, the electronic device 101 may attempt a registration request 501 for the 5GC 352 through the NR gNB 350 as illustrated in FIG. 5A.

According to various embodiments, the electronic device 101 may transmit a registration request message to the 5GC 352, for example, an AMF (access and mobility management function) through the NR gNB 350. The AMF may provide an access and mobility management function in units of electronic devices 101. A reference point between the AMF and the electronic device 101 may be defined as N1. When the electronic device 101 is in a SGMM-idle mode and transmission of an initial NAS message is needed, the electronic device 101 may make a request for making the RRC connection to a lower layer. When it is identified from the lower layer that the RRC connection is made, the electronic device 101 may have an N1 NAS signaling connection and enter a SGMM connected mode. When the electronic device 101 is in the SGMM idle mode and receives an indication indicating that the AS connection is made from the lower layer, the electronic device 101 may identify that the N1 NAS signaling connection is made and transmit the initial NAS message. The initial NAS message may be one of a Registration Request message, a Deregistration Request message, or a Service Request. When the electronic device 101 performs initial registration for a 5GS service, performs initial registration for an emergency service, performs initial registration for an SMS through NAS, or moves from a GERAN to an NG-RAN or from a UTRAN to an NG-RAN, the electronic device 101 may transmit the Registration Request message, but there no limitation in a condition of the transmission. The 5GC 352, for example, the AMF may transmit a Registration Accept message or a Registration Reject message to the electronic device 101 in response to the Registration Request message.

In one example, the electronic device 101 may receive no message from the 5GC 352, for example, the AMF. For example, there may be a possibility that a radio environment between the electronic device 101 and the NR gNB 350 is not good, and there may also be a possibility of failure in a registration process of the AMF. When the radio environment between the electronic device 101 and the NR gNB 350 is not good, the NAS of the electronic device 101 may fail in identifying the indication indicating that the AS connection is made (for example, the RRC connection is made) from the AS. In this case, the electronic device 101 may not receive a response message from the AMF and may identify failure of the registration procedure. The electronic device 101 may deactivate the N1 mode capability and initiate the timer on the basis of failure of message reception from the AMF and/or failure of the RRC connection. In one example, when the registration fails or an attempt counter is 5 or more, the electronic device 101 may deactivate the N1 mode capability and initiate a timer T3502 but there is no limitation on a timer initiation condition and no limitation on a timer type. The timer T3502 may be initiated when the registration attempt counter is 5 in the registration failure, and may be stopped by transmission of the Registration Request message. When the timer T3502 expires, the electronic device 101 may initiate the registration procedure as still needed.

According to various embodiments, when the registration request 501 for the 5GC 352 fails, the electronic device 101 may perform a registration procedure 503 (or an attach procedure) for the EPC 342, for example, an MME or a TAU (tracking area update) procedure (for example, transmission of a TAU request) through the LTE eNB 340 as illustrated in FIG. 5A. For example, when the N1 mode capability is deactivated and an S1 mode capability is supported, the electronic device 101 may select an E-UTRA cell (for example, the LTE eNB 340) connected to the EPC 342 of the PLMN in a list of registered PLMNs or equivalent PLMs. Although not illustrated, when the electronic device 101 does not support the S1 mode, registration may be performed in another RAT supported by the electronic device 101. The registration procedure for the EPC 342 may follow, for example, a scheme proposed in the 3GPP and a detailed operation thereof is omitted.

Referring back to FIG. 4, the electronic device 101 may reactivate the N1 mode capability on the basis of identification that a preset condition associated with 5G communication is satisfied through dual connectivity before the timer expires in operation 405. For example, referring to FIG. 5B, the electronic device 101 may receive an RRC reconfiguration message 511 from the LTE eNB 340 in the state connected to the EPC 342. The RRC reconfiguration message 511 may include at least one of a measurement object, a reporting configuration, a measurement ID, a quantity configuration, or a measurement gap. The reporting configuration may include, for example, an event NR-B1. Since the N1 mode capability is about the connection to the 5GC 352, the electronic device 101 may receive the RRC reconfiguration message including the event NR-B1 even through the N1 mode capability is deactivated. The electronic device 101 may measure at least one of RSRP (reference signal received power), RSRQ (reference signal received quality), RSSI (received signal strength indicator), or SNR (signal to noise ratio) of a signal 513 from the NR gNB 350 and determine whether the measurement result satisfies a reporting condition (for example, the event NR-B1). When it is determined that the reporting condition is satisfied, the electronic device 101 may perform the measurement report 515. Meanwhile, FIG. 5B illustrates that the electronic device 101 measures the signal 513 from the NR gNB 350 for which the electronic device 101 has conventionally attempted registration and reports the measurement result, but it is only an example. The electronic device 101 may measure a signal from a base station (not shown) other than the NR gNB 350 for which the registration has been attempted and report the measurement result through the LTE eNB 340. In another example, the electronic device 101 may perform handover to another LTE eNB (not shown) while being registered in the EPC 342, receive an RRC reconfiguration message from another LTE eNB (not shown), and measure a received MO (measurement object).

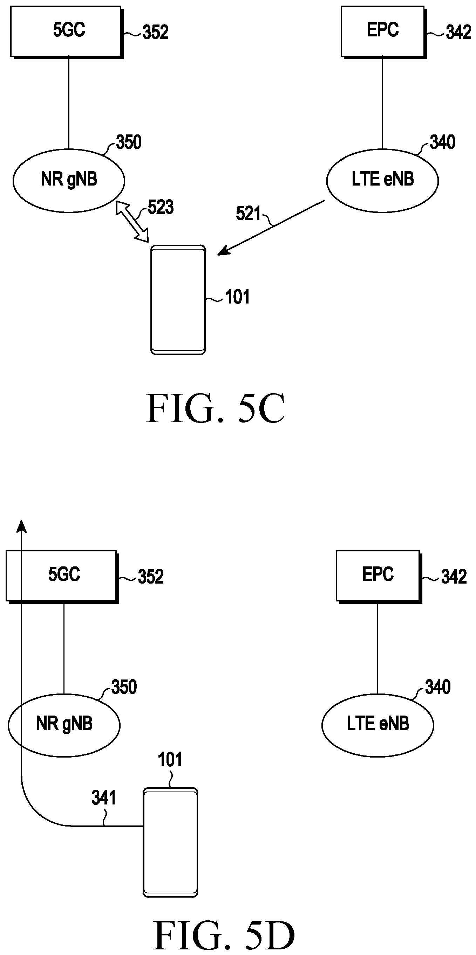

Referring to FIG. 5C, the LTE network (for example, the LTE eNB 340 and/or the EPC 342) according to various embodiments may determine the NR gNB 350 as the SN on the basis of the reported measurement result. Meanwhile, it is illustrated that the NR gNB 350 is connected to the 5GC 352 in FIG. 5C, the NR gNB 350 may be connected through the LTE eNB 340 when the NR gNB 350 supports ENDC. In this case, the LTE eNB 340 and the NR gNB 350 may transmit and receive data for SCG addition. For example, the LTE eNB 340 may transmit and receive an additional request and acknowledgement to and from the NR gNB 350. The LTE eNB 340 may transmit the RRC reconfiguration message 521 having an SCG addition configuration to the electronic device 101. The electronic device 101 may perform SSB (synchronization signal block) synchronization on the basis thereof. The electronic device 101 may transmit and receive user data by using at least one of the LTE eNB 340 or the NR gNB 350 by performing a contention free random access channel (CF RACH) procedure 523 with the NR gNB 350. In one embodiment, the electronic device 101 may identify that success of the RACH procedure with the NR gNB 350 is satisfaction to a preset condition and reactivate the N1 mode capability. In another embodiment, the electronic device 101 may identify that satisfaction of the measurement result of the signal 513 from the NR gNB 350 to the reporting condition (for example, event B1) is the preset condition and reactivate the N1 mode capability, and those skilled in the art may understand that there is no limitation on a reactivation condition of the N1 mode capability if the condition indicates that the radio environment of the NR gNB 350 is good.

The NR gNB 350 according to various embodiments may be configured to support both the SA mode and the NSA mode. Accordingly, RACH success through the NSA for the NR gNB 350 may mean that a possibility of registration in the 5GC 352 using the NR gNB 350 is relatively high. Accordingly, the electronic device 101 according to various embodiments may be configured to reactivate the N1 mode capability according to RACH success through the NSA for the NR gNB 350.

When the N1 mode capability is reactivated, the electronic device 101 may transmit a message (for example, a TAU message) including activation information of the N1 mode capability to the EPC 342. The EPC 342 may identify that the electronic device 101 supports the N1 mode capability. The EPC 342 and the electronic device 101 may perform an operation according to at least one of reselection, redirection, or handover in the future, and the electronic device 101 may be registered in the 5GC 352 through SA as indicated by reference numeral 341 in FIG. 5D. Thereafter, the electronic device 101 may transmit and receive a control message and user data through the NR gNB 350. Accordingly, even before the timer (for example, the timer T3502) expires, the N1 mode capability may be activated at an earlier time point according to improvement of the radio environment, and thus the electronic device 101 may perform registration in the 5GC 352 SA.

According to various embodiments, the electronic device 101 may be configured to identify whether the NR gNB 350 supports SA and provide an N1 service. For example, when the electronic device 101 does not receive SIB1 from the NR gNB 350, identifies that there is no cell selection information in SIB1, or manages a list of information indicating that the NR gNB 350 does not support SA, the electronic device 101 may identify that the NR gNB 350 cannot support SA.

At least some of the various operations of FIG. 4 and operations of the electronic device described below may be understood as being performing by a DSSK (dual system selection key) module. The DSSK module may be a module for controlling activation/deactivation of the N1 mode capability as described above or controlling activation/deactivation of the S1 mode capability described below. The DSSK module may be implemented in hardware to be embodied as a part of at least one processor (for example, the processor 120, the first communication processor 212, the second communication processor 214, the integrated communication processor 260, or the integrated SoC) or implemented in dedicated hardware. Alternatively, the DSSK module may be a set of at least one instruction for controlling activation and/or deactivation of the N1 mode capability and/or the S1 mode capability.

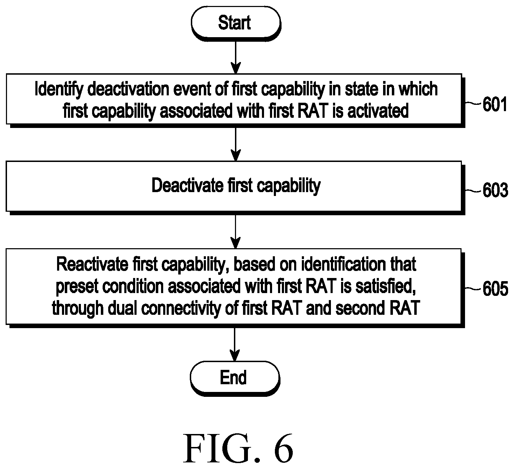

FIG. 6 is a flowchart illustrating a method of operating an electronic device according to various embodiments.

According to various embodiments, the electronic device 101 (for example, at least one of the processor 120, the first communication processor 212, the second communication processor 214, the integrated communication processor 260, or the integrated SoC) may identify a deactivation event of a first capability in the state in which the first capability associated with a first RAT is activated in operation 601. In one example, the deactivation event of the first capability may be failure of registration in a core network corresponding to the first RAT. As the N1 mode capability is deactivated on the basis of failure of the registration in the SGC 342, failure of the registration in the core network may be the deactivation event in one example.

In another example, the deactivation event of the first capability may be failure of acquisition of a response to a Service Request message. For example, the NAS of the electronic device 101 may identify a need to transmit the Service Request message. When identifying the indication indicating that the AS connection is made from the AS, the NAS of the electronic device 101 may transmit the Service Request message which is an NAS message in response thereto. However, when making the AS connection (for example, the RRC connection) (or the RACH procedure) fails, the electronic device 101 may identify failure of transmission of the Service Request message. For example, when failure of transmission of the Service Request message is repeatedly generated, for example, when the number of failure is a predetermined number or more, the electronic device 101 may be configured to deactivate the first capability. In another example, the deactivation event of the first capability may be the case in which the network does not support a voice over 3GPP even though voice-centric usage is configured in the electronic device 101. In another example, the deactivation event of the first capability may be the case in which execution of a function which is not supported by the core network corresponding to the first RAT is required. In another example, the deactivation event of the first capability may be the case in which information indicating that the first capability is not allowed from the network. For example, the electronic device 101 may transmit the Registration Request message or the Service Request message, and, for example, a reject message of a cause of #27 (for example, N1 mode is not allowed) defined in 3GPP TS 24.501 may be received. The electronic device 101 may deactivate the N1 mode on the basis of reception of the corresponding message. In another example, the deactivation event of the first capability may be, for example, identification of a cause (for example, #72) of an abnormal case defined in 3GPP TS 24.501. In another example, deactivation event of the first capability may be, for example, identification of causes of #95, #96, #97, #99 and #111 defined in 3GPP TS 24.501. When the causes of #95, #96, #97, #99 and #111 are identified, the electronic device 101 may configure a registration attempt counter as 5 and deactivate the N1 mode capability.

According to various embodiments, the electronic device 101 may deactivate the first capability in operation 603. In operation 605, the electronic device 101 may reactivate the first capability on the basis of satisfaction of a preset condition associated with the first RAT through dual connectivity of the first RAT and the second RAT. For example, the electronic device 101 may be registered in a core network corresponding to the second RAT on the basis of the second RAT. The electronic device 101 may detect at least one parameter indicating a communication environment for the first RAT on the basis of an MO (measurement object) received from the network corresponding to the second RAT. The electronic device 101 may perform, for example, an RACH procedure with the first RAT according to an SCG addition procedure for the first RAT. The electronic device 101 may reactivate the first capability on the basis of success of the RACH for the first RAT.

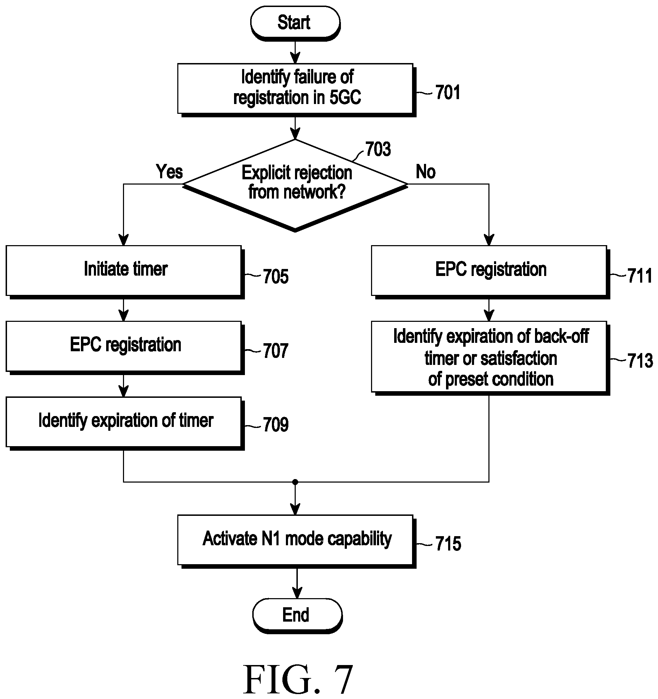

FIG. 7 is a flowchart illustrating a method of operating an electronic device according to various embodiments.

According to various embodiments, the electronic device 101 (for example, at least one of the processor 120, the first communication processor 212, the second communication processor 214, the integrated communication processor 260, or the integrated SoC) may identify failure of registration in the 5GC 352 in operation 701. In operation 703, the electronic device 101 may identify whether a cause of the failure of the registration is explicit rejection from the network. For example, when the NAS of the electronic device 101 fails in identifying the indication indicating that the AS connection (for example, the RRC connection) is made from the AS, it is not the explicit rejection from the network. For example, when the electronic device 101 receives a Registration Reject message from the network, it may be the explicit rejection from the network.

When the explicit rejection from the network is identified (Yes of operation 703), the electronic device 101 may initiate a timer according to various embodiments in operation 705. The electronic device 101 may initiate, for example, a timer T3502, but there is no limitation in a type of the timer. In operation 707, the electronic device 101 may perform registration in the EPC 342. After the registration in the EPC 342, the electronic device 101 may transmit and receive data through the LTE eNB 340 and the EPC 342. In operation 709, the electronic device 101 may identify expiration of the timer. When expiration of the timer is identified, the electronic device 101 may activate the N1 mode capability in operation 715. The electronic device 101 may transmit, for example, activation information of the N1 mode capability to the EPC 342. The EPC 342 may identify that the N1 mode capability of the electronic device 101 is activated and may perform a reselection, redirection, or handover procedure later, and thus the electronic device 101 may be registered through the 5GC 352.

When the explicit rejection from the network is not identified (No of operation 703), the electronic device 101 may perform registration in the EPC 342 according to various embodiments in operation 711. The electronic device 101 may identify expiration of back-off timer or satisfaction of a preset condition in operation 713. The electronic device 101 may separately configure, for example, the back-off timer for activating the N1 mode capability. The corresponding back-off timer may be configured to have, for example, the same period as the timer T3502, or the period may be different. In various embodiments, the period of the back-off timer may be controlled, which will be described below. The preset condition in operation 713 may be, for example, the success of the RACH procedure based on dual connectivity as described above, but there is no limitation. When expiration of the back-off timer or satisfaction of the preset condition is identified, the electronic device 101 may activate the N1 mode capability in operation 715.

As described above, the electronic device 101 may reactivate the N1 mode capability according to expiration of T3502 when, for example, the explicit rejection from the network is identified, and may reactivate the N1 mode capability on the basis of, for example, satisfaction of the preset condition when the explicit rejection from the network is not identified. Alternatively, when the explicit rejection from the network is not identified, the electronic device 101 may activate the N1 mode capability on the basis of expiration of the back-off timer for activating the N1 mode capability.

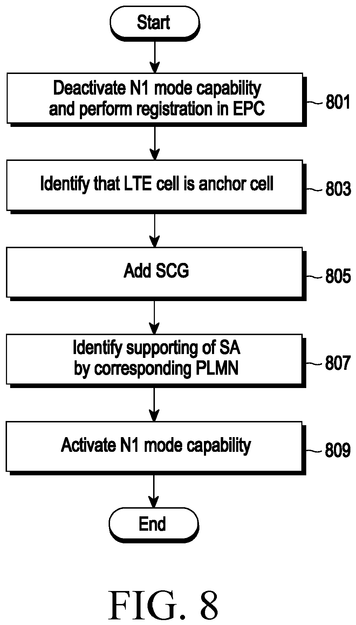

FIG. 8 is a flowchart illustrating a method of operating an electronic device according to various embodiments.

According to various embodiments, the electronic device 101 (for example, at least one of the processor 120, the first communication processor 212, the second communication processor 214, the integrated communication processor 260, or the integrated SoC) may deactivate the N1 mode capability and perform registration in the EPC 342 in operation 801. For example, the electronic device 101 may perform registration in the EPC 342 through an LTE cell (for example, the LTE eNB 340). In operation 803, the electronic device 101 may identify that the LTE cell is an anchor cell. For example, the electronic device 101 may identify that the LTE cell is an anchor cell which can support ENDC of LTE communication and 5G communication. For example, the electronic device 101 may receive SIB (system information block) 2 from the LTE cell and identify whether the LTE cell is the anchor cell on the basis of upperlayerindication r-15 within SIB 2. When upperlayerindication r-15 is true, it may be identified that the corresponding LTE cell is the anchor cell supporting ENDC.

When it is identified that the LTE cell is the anchor cell supporting ENDC, the electronic device 101 may perform SCG addition according to various embodiments in operation 805. In various embodiments, the electronic device 101 may perform SCG addition without identifying whether the LTE cell is the anchor cell. The electronic device 101 may receive an RRC reconfiguration message including an MO from the LTE cell. The electronic device 101 may perform measurement on the basis of the received RRC reconfiguration message. The electronic device 101 may determine whether the measurement result satisfies a reporting condition included in the RRC reconfiguration message. The electronic device 101 may perform an MR (measurement report) for the LTE cell when the reporting condition is satisfied. The electronic device 101 may receive an RRC configuration message for addition of an NR cell subjected to the MR from the LTE cell. The electronic device 101 may perform an RACH procedure with the NR cell. The electronic device 101 may identify that the corresponding PLMN supports SA in operation 807. When it is identified that the corresponding PLMN supports SA, the electronic device 101 may activate the N1 mode capability in operation 809. When the corresponding PLMN does not support SA, the electronic device 101 cannot perform registration for SA in the SGC 352 even though the N1 mode capability is activated, and thus the N1 mode capability may remain in the deactivated state.

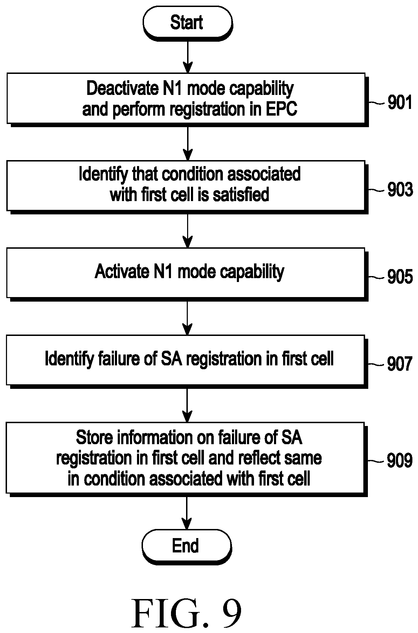

FIG. 9 is a flowchart illustrating a method of operating an electronic device according to various embodiments.

According to various embodiments, the electronic device 101 (for example, at least one of the processor 120, the first communication processor 212, the second communication processor 214, the integrated communication processor 260, or the integrated SoC) may deactivate the N1 mode capability and may be registered in the EPC 342 in operation 901.

According to various embodiments, the electronic device 101 may identify that a condition associated with a first cell is satisfied in operation 903. The electronic device 101 may identify the first cell by identifying a signal (for example, a reference signal) from the first cell on the basis of dual connectivity. For example, the electronic device 101 may manage a reactivation condition of the N1 mode capability for the first cell on the basis of LTE communication and identify that the condition associated with the first cell is satisfied. When the first cell is first identified, the electronic device 101 may determine whether a default condition is satisfied. In one example, the electronic device 101 may identify whether an RACH for the first cell is successful on the basis of SCG addition for the first cell. Alternatively, the electronic device 101 may identify expiration of a back-off timer configured for a PLMN corresponding to the first cell.

According to various embodiments, the electronic device 101 may activate the N1 mode capability on the basis of satisfaction of the condition associated with the first cell in operation 905. After activating the N1 mode capability, the electronic device 101 may perform an inter-RAT operation (for example, at least one of reselection, redirection, or handover) to 5G communication and attempt registration in the 5GC 352 on the basis thereof. In operation 907, the electronic device 101 may identify failure of SA registration for the first cell. For example, the NAS of the electronic device 101 may fail in identifying of the indication indicating the AS connection from the AS. In operation 909, the electronic device 101 may store failure information of SA registration for the first cell and reflect the same in the condition associated with the first cell. In one example, the electronic device 101 may increase a period of the back-off timer for the PLMN corresponding to the first cell. When the electronic device 101 identifies the first cell in future, the N1 mode capability may be activated after expiration of the increased period. Accordingly, as the period of reactivation of the N1 mode capability by the first cell is delayed, the reactivation of the N1 mode capability by the cell causing SA registration failure may be more limited than the original. In another example, when the number of SA registration failure for the first cell is different according to a threshold number, the electronic device 101 may maintain the deactivation state of the N1 mode capability even though the RACH for the first cell is successful. For example, the electronic device 101 may mange the first cell as a black list of reactivation of the N1 mode capability. The electronic device 101 may be configured to exclude the first cell from the black list on the basis of SA registration success based on the first cell in the future. For example, when the first cell is included in the black list, the electronic device 101 may be configured for the first cell to activate the N1 mode capability if the back-off timer configured for the PLMN corresponding to the first cell expires.

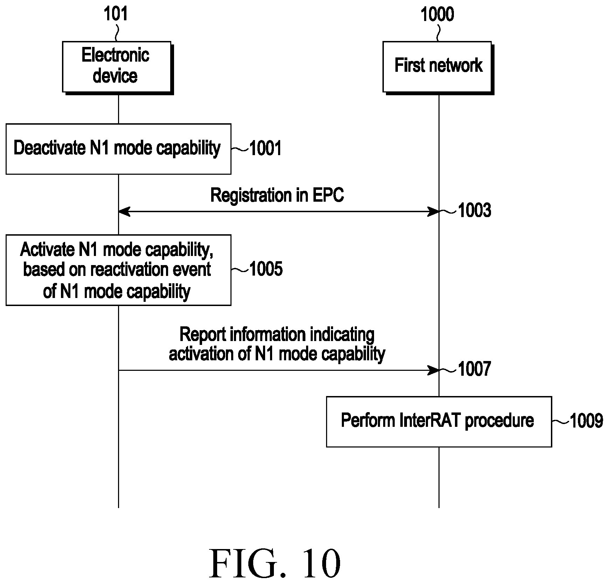

FIG. 10 is a flowchart illustrating a method of operating an electronic device and a network according to various embodiments.

According to various embodiments, the electronic device 101 (for example, at least one of the processor 120, the first communication processor 212, the second communication processor 214, the integrated communication processor 260, or the integrated SoC) may deactivate the N1 mode capability in operation 1001. For example, the electronic device 101 may deactivate the N1 mode capability on the basis of the number of attempts for registration in the 5GC 352 corresponding to 5. The electronic device 101 may be registered in the EPC 342 in operation 1003.

According to various embodiments, the electronic device 101 may activate the N1 mode capability on the basis of a reactivation event of the N1 mode capability in operation 1005. For example, the electronic device 101 may activate the N1 mode capability on the basis of RACH success for the NR gNB. In operation 1007, the electronic device 101 may report activation information of the N1 mode capability to a first network (for example, the EPC 342). For example, the electronic device 101 may report a TAU request message including activation information of the N1 mode capability to a first network 1000. Accordingly, the first network 1000 may identify that the electronic device 101 supports the N1 mode capability. In operation 1009, the first network 1000 may perform an InterRAT procedure, for example, at least one of reselection, redirection, or handover for NR. FIG. 10 illustrates that the first network 1000 performs the InterRAT procedure alone, but those skilled in the art understands that the electronic device 101 and the first network 1000 may perform the InterRAT procedure. Thereafter, the electronic device 101 may perform registration in the 5GC 352.

As described above, when the RACH procedure based on NSA is successful, the electronic device 101 according to various embodiments may transmit a message (for example, the TAU request message) including N1 mode capability supporting information even before a timer (for example, the timer T3502) expires.

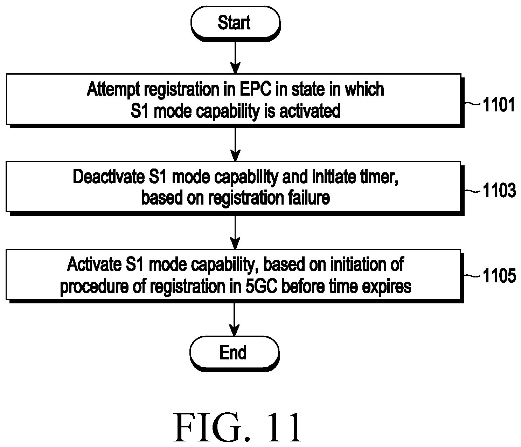

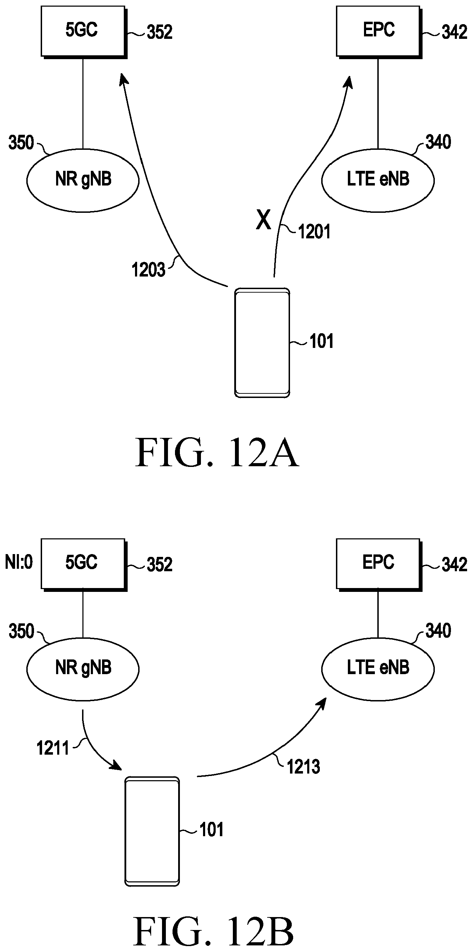

FIG. 11 is a flowchart illustrating a method of operating an electronic device according to various embodiments. The embodiment of FIG. 11 is described in more detail with reference to FIGs. 12A and 12B. FIGs. 12A and 12B illustrate operations of the electronic device and the network according to various embodiments.

According to various embodiments, the electronic device 101 (for example, at least one of the processor 120, the first communication processor 212, the second communication processor 214, the integrated communication processor 260, or the integrated SoC) may attempt registration in the EPC 342 (for example, the MME) in the state in which the S1 mode capability is activated in operation 1101. The S1 mode capability may also be named an E-UTRA capability according to circumstances. The MME is an entity of an E-UTRAN control plane, and may authenticate a user, download a user profile, and perform NAS signaling. A reference point of the MME and the LTE eNB 340 may be named, for example, S1. In operation 1103, the electronic device 101 may deactivate the S1 mode capability on the basis of failure of registration in the EPC 342 and initiate the timer. For example, the electronic device 101 may attempt a registration request 1201 for the EPC 342 through the LTE eNB 340 in FIG. 12A.

When the electronic device 101 is in an EMM-idle mode and transmission of an initial NAS message is needed, the electronic device 101 may make a request for making the RRC connection to a lower layer. When the RRC connection is successfully made in the S1 mode, the electronic device 101 may enter an EMM-CONNECTED mode and identify that the NAS signaling connection is made. The initial NAS message may be one of an Attach Request message, a Detach Request message, a Tracking Area Update Request message, a Service Request message, an Extended Service Request message, or a Control Plane Service Request message. The EPC 342, for example, the MME may transmit an Attach Reject message or an Attach Accept message to the electronic device 101.

In one example, the electronic device 101 may receive no message from the EPC 342, for example, the MME. For example, there is a possibility that a radio environment between the electronic device 101 and the LTE eNB 340 is not good and also a possibility that a registration process of the MME fails. When the radio environment between the electronic device 101 and the LTE eNB 340 is not good, the electronic device 101 may fail in receiving a message from the EPC 342 according to failure of the RRC connection. The electronic device 101 may identify failure of the registration procedure. The electronic device 101 may deactivate the S1 mode capability and initiate the timer on the basis of failure of message reception from the MME and/or failure of the RRC connection. In one example, when an Attach attempt counter or a TAU attempt counter is 5, the electronic device 101 may deactivate the S1 mode capability and initiate the timer for activating E-UTRA, but there is no limitation in a timer initiation condition and a timer type.

According to various embodiments, when the registration request 1201 for the EPC 342 fails, the electronic device 101 may attempt a registration procedure 1203 for the 5GC 352, for example, the AMF through the NR gNB 350 as illustrated in FIG. 12A. For example, when the S1 mode capability is deactivated, the electronic device 101 may select an NR cell (for example, the NR gNB 350) connected to the 5GC 352 of the PLMN in a list of registered PLMNs or equivalent PLMs.

Referring back to FIG. 11, the electronic device 101 may activate the S1 mode capability on the basis of initiation of the 5GC registration procedure before the timer expires in operation 1105. For example, the electronic device 101 may activate the S1 mode capability according to initiation of a procedure for transmitting a Registration Request message. Accordingly, the Registration Request message may include activation information of the S1 mode capability.

In one example, the electronic device 101 may insert the activation information of the S1 mode capability into the Registration Request message and end the timer for activating E-UTRA. According to the end of the timer, the electronic device 101 may select a service for the required RAT without any request from the network. In another example, the electronic device 101 may insert the activation information of the S1 mode capability into the Registration Request message and maintain the progress without ending the timer for activating E-UTRA.

Referring to FIG. 12B, in a service which is not supported in the 5G SA mode, handover or Idle-Redirect to the EPS may be performed. When transmitting a voice call service request message through the NR gNB 350, the electronic device 101 may receive a message 1211 causing EPS fallback through the NR gNB 350. For example, the electronic device 101 may perform MO Call SIP signaling. The electronic device 101 may attempt registration (or attach) 1213 for the EPC 342 on the basis of the message 1211 causing EPS fallback (for example, RRC Release for an RRC Idle case). For example, when receiving the message 1211, the electronic device 101 may transfer a TAU request to the EPC 342 and receive a TAU accept from the EPC 342. For example, in an EPC fallback process, an MO (mobile originated)/MT (mobile terminated) IMS voice session may start in a 5GC registration state. In this case, a PCF (policy control function) may transmit a PDU session modification request for QoS (quality of service) flow setup to an NG RAN (next generation radio access network). The NG RAN in which EPS fallback support is configured may start EPS fallback in consideration of a LTE capability, a network configuration, and a radio condition. The NG RAN may transmit PDU session modification reject to PGW-C (packet data network gateway-control) and SMF (session management function), and handover (H/O) or redirection may be performed. The PGW-C and the SMF may configure a dedicated bearer for the IMS voice.

According to various embodiments, since the S1 mode capability has been already activated, the electronic device 101 may directly perform registration (or attach) 1213 in the EPC 342 according to EPS fallback. When the S1 mode capability is deactivated, the electronic device 101 cannot perform EPS fallback even though MO Call SIP signaling is performed, and thus the Call may fail.

As described above, the electronic device 101 according to various embodiments may activate the S1 mode capability at a time point at which registration in the 5GC 352 is attempted. Meanwhile, in another embodiment, the electronic device 101 may activate the S1 mode capability on the basis of identification that registration in the 5GC 352 is completed, and those skilled in the art can understand that there is no limitation in a time point at which the S1 mode capability is activated.

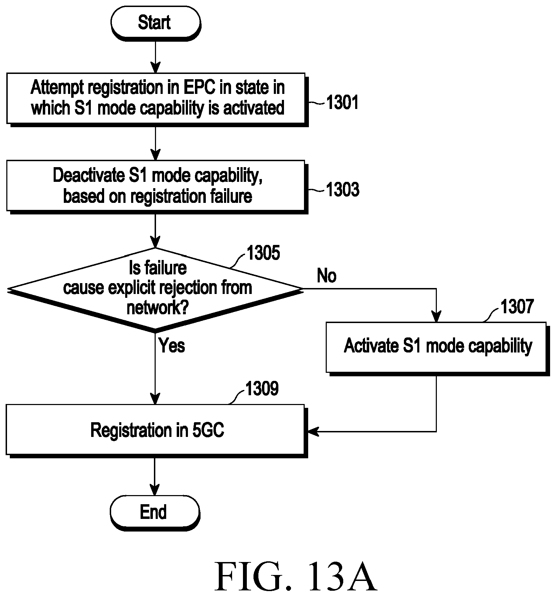

FIG. 13A is a flowchart illustrating a method of operating an electronic device according to various embodiments.

According to various embodiments, the electronic device 101 (for example, at least one of the processor 120, the first communication processor 212, the second communication processor 214, the integrated communication processor 260, or the integrated SoC) may attempt registration (or Attach) in the EPC 342 in the state in which the S1 mode capability is activated in operation 1301. For example, the electronic device 101 may perform a procedure for transmitting an NAS message. In this embodiment, it may be understood by those skilled in the art that there is limitation in the NAS message if the NAS message is an Attach Request message or an initial NAS message. In FIG. 13A, the electronic device 101 may fail in registration (or Attach). For example, the electronic device 101 may not receive a response message from the EPC 342 or fail in making the RRC connection with the LTE eNB 340, or may receive a message (for example, an Attach Reject message) indicating failure of registration (or Attach) from the EPC 342.

According to various embodiments, the electronic device 101 may deactivate the S1 mode capability on the basis of failure of registration in the EPC 342 in operation 1303. In operation 1305, the electronic device 101 may determine whether a failure cause is explicit rejection from the network. For example, when the electronic device 101 receives a message (for example, an Attach Reject message) indicating registration failure from the EPC 342, the electronic device 101 may determine explicit rejection from the network. For example, the electronic device 101 may determine that the failure cause is not explicit rejection from the network on the basis of failure of message reception from the EPC 342 or failure of the RRC connection.

When it is determined that the failure cause is not explicit rejection from the network (No of operation 1305), the electronic device 101 may activate the S1 mode capability according to various embodiments in operation 1307. For example, the electronic device 101 may activate the S1 mode capability on the basis of identification of a request for registration in the 5GC 352 or a request for transmission of the NAS message to the 5GC 352. However, there is no limitation in the time point at which the S1 mode capability is activated if the time point is after failure of registration (or Attach) in the EPC 342 is identified. Thereafter, the electronic device 101 may attempt registration in the 5GC 352 in operation 1309. The electronic device 101 may transmit a Registration Request message for the 5GC 352 in order to attempt registration. The Registration Request message may include information on the network capability of the electronic device 101, for example, information indicating that the electronic device 101 activates the S1 mode capability (for example, E-UTRA capability) or supports S1. Accordingly, the 5GC 352 may identify that the S1 mode capability of the electronic device 101 is activated. Thereafter, when IMS SIP signaling for termination or origination of a call of the electronic device 101 is performed, the 5GC 352 may perform an EPS fallback procedure. The electronic device 101 may be connected to the EPC 342 on the basis of activation of the S1 mode capability and may perform a VoLTE service according to EPS fallback.

When it is determined that the failure cause is explicit rejection from the network (Yes of operation 1305), the electronic device 101 may be registered in the 5GC 352 while the S1 mode capability is deactivated according to various embodiments in operation 1309. When the S1 mode capability is deactivated, the electronic device 101 may fail in EPS fallback. However, when the explicit rejection from the network is identified, maintenance of the deactivated state of the S1 mode capability is only an example, and the electronic device 101 may detect failure of the EPC 342, and may be configured to activate the S1 mode capability when a need to transmit the NAS message to the 5GC 351 is identified.

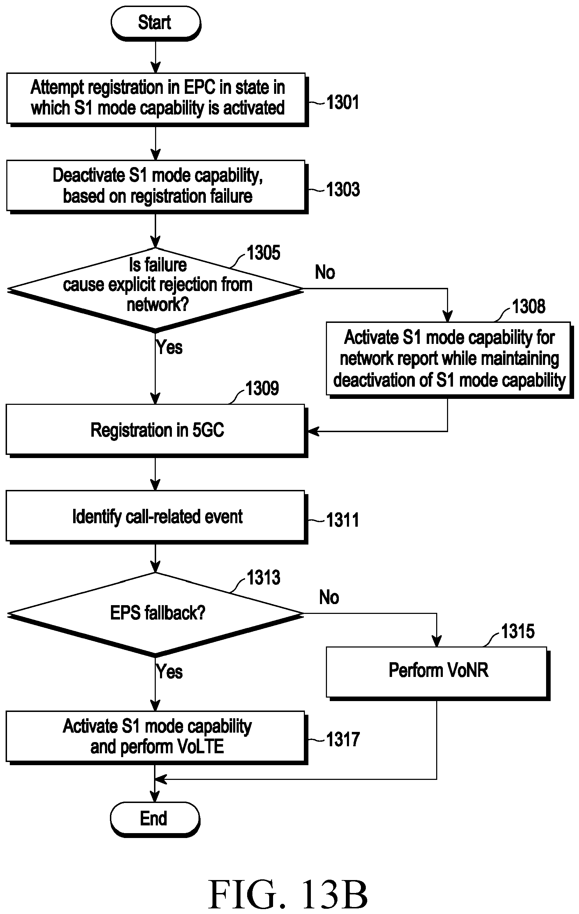

FIG. 13B is a flowchart illustrating a method of operating the electronic device according to various embodiments.

According to various embodiments, the electronic device 101 (for example, at least one of the processor 120, the first communication processor 212, the second communication processor 214, the integrated communication processor 260, or the integrated SoC) may attempt registration (or Attach) in the EPC 342 in the state in which the S1 mode capability is activated in operation 1301. When registration in the EPC 342 fails, the electronic device 101 may deactivate the S1 mode capability on the basis of registration failure in operation 1303. In operation 1305, the electronic device 101 may determine whether a failure cause is explicit rejection from the network.

According to various embodiments, when it is identified that the failure cause is explicit rejection from the network (Yes of operation 1305), the electronic device 101 may activate the S1 mode capability for a network report while maintaining deactivation of the S1 mode capability in operation 1308. For example, the electronic device 101 may be configured to activate the S1 mode capability included in a message (for example, the Registration Request message) for registration in the 5GC 352 while maintaining the internally managed deactivation state of the S1 mode capability. As the electronic device 101 maintains the internally managed deactivation state of the S1 mode capability, it is possible to prevent an operation in which the electronic device 101 periodically discovers an LTE communication network or moves to an LTE communication network by itself. In this case, the electronic device 101 may continue the process without expiration of a timer for activating E-UTRA. In contrast, in the embodiment of FIG. 13A, the electronic device 101 may directly deactivate the internally managed S1 mode capability in operation 1307.

According to various embodiments, in operation 1309, the electronic device 101 may perform registration in the 5GC 352. For example, when explicit rejection from the network is identified in operation 1305, the electronic device 101 may transmit a Registration Request message including information indicating the deactivation state of the S1 mode capability to the 5GC 352. For example, when explicit rejection from the network is not identified, the electronic device 101 may transmit a Registration Request message including information indicating the activation state of the S1 mode capability to the 5GC 352 in operation 1308. In operation 1311, the electronic device 101 may identify a call-related event. For example, the electronic device 101 may perform IMS SIP signaling for call termination or origination. In operation 1313, the electronic device 101 may determine whether EPS fallback is required. For example, when the network does not support VoNR, the network may transmit a message causing the electronic device 101 to have EPS fallback. When it is identified that EPS fallback is not required (No of operation 1313), the electronic device 101 may perform VoNR in operation 1315. When it is identified that EPS fallback is required (Yes of operation 1313), the electronic device 101 may activate the internally managed S1 mode capability and perform VoLTE in operation 1317. The electronic device 101 may expire a timer for activating E-UTRA and activate the S1 mode capability. As described above, the electronic device 101 may transfer the TAU request to the EPC 342, receive a TAU accept from the EPC 342, and perform VoLTE on the basis thereof.

According to various embodiments, an electronic device may include at least one processor, and the at least one processor may be configured to attempt registration in a 5GC (5^{th} generation core) in a state in which an N1 mode capability is activated, deactivate the N1 mode capability, based on failure of the registration in the 5GC, initiate a timer for activating again the N1 mode capability, and activate the N1 mode capability, based on identification that a preset condition associated with 5G communication is satisfied, through dual connectivity of LTE communication and the 5G communication based on an EPC (evolved packet core) before the timer expires..

According to various embodiments, the at least one processor may be further configured to perform registration in the EPC, based on the failure of the registration in the 5GC.

According to various embodiments, the at least one processor may be configured to initiate the timer, based on attempts of the registration in the 5GC corresponding to a predetermined number as at least a part of an operation of initiating the timer for activating again the N1 mode capability.

According to various embodiments, the at least one processor may be further configured to identify at least one of failure of message reception from the SGC or failure of an RRC connection with an NR gNB corresponding to the 5GC.

According to various embodiments, the at least one processor may be configured to identify at least one of the failure of the message reception from the SGC or the failure of the RRC connection with the NR gNB corresponding to the 5GC and activate the N1 mode capability, based on identification that the preset condition is satisfied as at least a part of an operation of activating the N1 mode capability, based on identification that the preset condition associated with the 5G communication is satisfied.

According to various embodiments, the at least one processor may be further configured to receive a first RRC reconfiguration message including a measurement object associated to the 5G communication and a reporting condition from an LTE eNB associated with the LTE communication and measure at least one quantity of communication signals from the NR gNB of the 5G communication, based on the measurement object.

According to various embodiments, the at least one processor may be further configured to report the at least one measured quantity to the LTE eNB, based on satisfaction of the at least one measured quantity to the reporting condition, receive a second RRC reconfiguration message of an addition configuration for the NR gNB from the LTE eNB, perform an RACH procedure with the NR gNB, based on reception of the second RRC reconfiguration message, and identify success of the RACH procedure as the preset condition.

According to various embodiments, the at least one processor may be further configured to activate the N1 mode capability, based on identification that the preset condition associated with the 5G communication is satisfied, and report a message including activation information of the N1 mode capability to the EPC.

According to various embodiments, the at least one processor may be further configured to activate the N1 mode capability, based on identification that the preset condition associated with the 5G communication is satisfied, and perform at least one of a reselection procedure, a redirection procedure, or a handover procedure associated with the 5G communication.

According to various embodiments, when the registration in the 5GC fails through the NR gNB for the 5G communication, based on at least one of the reselection procedure, the redirection procedure, or the handover procedure, the at least one processor may be further configured to control a preset condition associated with the NR gNB.

According to various embodiments, the at least one processor may be configured to perform at least one of the reselection procedure, the redirection procedure, or the handover procedure, based on supporting of an SA mode by the NR gNB for the 5G communication for at least one of the reselection procedure, the redirection procedure, or the handover procedure as at least a part of an operation of performing at least one of the reselection procedure, the redirection procedure, or the handover procedure.

According to various embodiments, an electronic device may include at least one processor, and the at least one processor may be configured to attempt registration in an EPC (evolved packet core) in a state in which an S1 mode capability is activated, deactivate the S1 mode capability, based on failure of the registration in the EPC, and initiate a timer for activating again the S1 mode capability, and attempt registration in a 5GC (5^{th} generation core) by transmission of a message including activation information of the S1 mode capability, based on failure of the registration in the EPC that is not rejection from the EPC, before the timer expires.

According to various embodiments, the at least one processor may be further configured to expire the timer and activate the S1 mode capability, based on identification that the failure of the registration in the EPC is not the rejection from the EPC and identification that transmission of the message is required before the timer expires.

According to various embodiments, the at least one processor may be further configured to perform a service based on VoWiFi after the timer expires and the S1 mode capability is activated.

According to various embodiments, the at least one processor may be further configured to transmit the message and maintain deactivation of the S1 mode capability while maintaining progress of the timer before the time expires.

According to various embodiments, the at least one processor may be further configured to activate the S1 mode capability, based on reception of a message causing expiration of the timer and/or EPS fallback.

According to various embodiments, the at least one processor may be further configured to activate the S1 mode capability and perform EPS fallback according to transmission and reception of at least one message for registration to and from the EPC in a state in which the S1 mode capability is activated, based on reception of a message causing EPS fallback from the 5GC and make a call through VoLTE, based on the EPC fallback.

According to various embodiments, the at least one processor may be further configured to attempt transmission of an NAS message corresponding to the EPC as at least a part of an operation of attempting the registration in the EPC and identify that failure of the registration in the EPC is not rejection from the EPC, based on identification of failure of RRC for transmitting the NAS message and/or failure of reception of a response message of transmission of the NAS message.

According to various embodiments, a method of operating an electronic device may include an operation of attempting registration in a 5GC (5^{th} generation core) in a state in which an N1 mode capability is activated, an operation of deactivating the N1 mode capability, based on failure of the registration in the 5GC and initiating a timer for activating again the N1 mode capability, and an operation of activating the N1 mode capability, based on identification that a preset condition associated with 5G communication is satisfied, through dual connectivity of LTE communication and the 5G communication based on an EPC (evolved packet core) before the timer expires.

According to various embodiments, the method may further include an operation of receiving a first RRC reconfiguration message including a measurement object associated to the 5G communication and a reporting condition from an LTE eNB associated with the LTE communication and an operation of measuring at least one quantity of communication signals from the NR gNB of the 5G communication, based on the measurement object

According to various embodiments, the method may further include an operation of reporting the at least one measured quantity to the LTE eNB, based on satisfaction of the at least one measured quantity to the reporting condition, an operation of receiving a second RRC reconfiguration message of an addition configuration for the NR gNB from the LTE eNB, an operation of performing an RACH procedure with the NR gNB, based on reception of the second RRC reconfiguration message, and an operation of identifying success of the RACH procedure as the preset condition.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
at least one processor,
wherein the at least one processor is configured to:
attempt registration in a 5^{th} generation core (5GC) in a state in which an N1 mode capability is activated,
deactivate the N1 mode capability based on failure of the registration in the 5GC, and initiate a timer for activating again the N1 mode capability, and
activate the N1 mode capability, based on identification that a preset condition associated with 5G communication is satisfied, through dual connectivity of LTE communication and the 5G communication based on an evolved packet core (EPC) before the timer expires.

2. The electronic device of claim 1, wherein the at least one processor is further configured to perform registration in the EPC, based on the failure of the registration in the 5GC.

3. The electronic device of claim 1, wherein the at least one processor is configured to initiate the timer, based on attempts of the registration in the 5GC corresponding to a predetermined number as at least a part of an operation of initiating the timer for activating again the N1 mode capability.

4. The electronic device of claim 1, wherein the at least one processor is further configured to identify at least one of failure of message reception from the 5GC or failure of an RRC connection with an NR gNB corresponding to the 5GC.

5. The electronic device of claim 4, wherein the at least one processor is configured to identify at least one of the failure of the message reception from the 5GC or the failure of the RRC connection with the NR gNB corresponding to the 5GC and activate the N1 mode capability, based on identification that the preset condition is satisfied as at least a part of an operation of activating the N1 mode capability, based on identification that the preset condition associated with the 5G communication is satisfied.

6. The electronic device of claim 1, wherein the at least one processor is further configured to
receive a first RRC reconfiguration message including a measurement object associated to the 5G communication and a reporting condition from an LTE eNB associated with the LTE communication,
measure at least one quantity of communication signals from the NR gNB of the 5G communication, based on the measurement object,
report the at least one measured quantity to the LTE eNB, based on satisfaction of the at least one measured quantity to the reporting condition,
receive a second RRC reconfiguration message of an addition configuration for the NR gNB from the LTE eNB,
perform an RACH procedure with the NR gNB, based on reception of the second RRC reconfiguration message, and
identify success of the RACH procedure as the preset condition.

7. The electronic device of claim 1, wherein the at least one processor is further configured to activate the N1 mode capability, based on identification that the preset condition associated with the 5G communication is satisfied, and report a message including activation information of the N1 mode capability to the EPC.

8. The electronic device of claim 1, wherein the at least one processor is further configured to activate the N1 mode capability, based on identification that the preset condition associated with the 5G communication is satisfied, and perform at least one of a reselection procedure, a redirection procedure, or a handover procedure associated with the 5G communication.

9. The electronic device of claim 8, wherein, in case that the registration in the 5GC fails through the NR gNB for the 5G communication, based on at least one of the reselection procedure, the redirection procedure, or the handover procedure, the at least one processor is further configured to control a preset condition associated with the NR gNB.

10. The electronic device of claim 8, wherein the at least one processor is configured to perform at least one of the reselection procedure, the redirection procedure, or the handover procedure, based on supporting of an SA mode by the NR gNB for the 5G communication for at least one of the reselection procedure, the redirection procedure, or the handover procedure as at least a part of an operation of performing at least one of the reselection procedure, the redirection procedure, or the handover procedure.

11. An electronic device comprising:
at least one processor,
wherein the at least one processor is configured to:
attempt registration in an evolved packet core (EPC) in a state in which an S1 mode capability is activated,
deactivate the S1 mode capability based on failure of the registration in the EPC, and initiate a timer for activating again the S1 mode capability, and
attempt registration in a 5^{th} generation core (5GC) by transmission of a message including activation information of the S1 mode capability, based on failure of the registration in the EPC that is not rejection from the EPC, before the timer expires.

12. The electronic device of claim 11, wherein the at least one processor is further configured to:
expire the timer and activate the S1 mode capability, based on identification that the failure of the registration in the EPC is not the rejection from the EPC and identification that transmission of the message is required before the timer expires, and
perform a service based on VoWiFi after the timer expires and the S1 mode capability is activated.

13. The electronic device of claim 11, wherein the at least one processor is further configured to:
transmit the message and maintain deactivation of the S1 mode capability while maintaining progress of the timer before the time expires, and
activate the S1 mode capability, based on reception of a message causing expiration of the timer and/or EPS fallback.

14. The electronic device of claim 11, wherein the at least one processor is further configured to:
activate the S1 mode capability and perform EPS fallback according to transmission and reception of at least one message for registration to and from the EPC in a state in which the S1 mode capability is activated, based on reception of a message causing EPS fallback from the 5GC, and
make a call through VoLTE, based on the EPC fallback.

15. The electronic device of claim 11, wherein the at least one processor is further configured to:
attempt transmission of an NAS message corresponding to the EPC as at least a part of an operation of attempting the registration in the EPC, and
identify that failure of the registration in the EPC is not rejection from the EPC, based on identification of failure of RRC for transmitting the NAS message and/or failure of reception of a response message of transmission of the NAS message.
